# EUROPÄISCHE PATENTSCHRIFT

(11) **EP 2 598 014 B1**
(45) Veröffentlichungstag und Bekanntmachung des Hinweises auf die Patenterteilung: **17.05.2017**
(21) Anmeldenummer: 11737929.7
(22) Anmeldetag: 21.07.2011
(51) Int. Cl.: A47L 9/28, G05B 1/01, E05B 35/10, E05B 35/14, E05B 35/00, G07C 9/00

(54) **REINIGUNGSVORRICHTUNG**
CLEANING DEVICE
DISPOSITIF DE NETTOYAGE

(30) Priorität: 26.07.2010 DE 102010038421
(43) Veröffentlichungstag der Anmeldung: 05.06.2013
(73) Patentinhaber: Alfred Kärcher GmbH & Co. KG, 71364 Winnenden (DE)
(72) Erfinder: NONNENMANN, Frank, 73614 Schorndorf (DE); SCHÜTZ, Michael, 70439 Stuttgart (DE); SCHÄFER, Rainer, 71397 Leutenbach (DE)
(74) Vertreter: Hoeger, Stellrecht & Partner Patentanwälte mbB
(86) Internationale Anmeldenummer: PCT/EP2011/062569
(87) Internationale Veröffentlichungsnummer: WO 2012/013575

(56) Entgegenhaltungen:
- EP-A1- 0 559 160
- EP-A2- 1 593 334
- WO-A2-03/038764
- DE-A1- 2 360 597
- DE-A1-102004 006 947
- DE-B- 1 096 242
- DE-U1- 29 604 605
- DE-U1- 29 720 720
- GB-A- 2 352 057
- GB-A- 2 353 180
- US-A- 3 569 981

## Beschreibung

Die Erfindung betrifft eine Reinigungsvorrichtung, umfassend mindestens einen Berechtigungsträger mit darauf hinterlegter Zugriffsberechtigung, die zum Zugriff auf die Reinigungsvorrichtung erforderlich ist, genau eine Aufnahme, in der der mindestens eine Berechtigungsträger positionierbar ist, sowie eine an der Aufnahme angeordnete Erfassungseinheit zum kontaktbehafteten Erfassen der Zugriffsberechtigung eines in der Aufnahme positionierten Berechtigungsträgers, wobei die Erfassungseinheit mindestens ein die Zugriffsberechtigung kontaktierendes Erfassungskontaktelement aufweist.

Bei einer derartigen Reinigungsvorrichtung erfolgt die Zugriffskontrolle anhand des Berechtigungsträgers, beispielsweise eines Schlüssels, auf dem die Zugriffsberechtigung hinterlegt ist. Bei der Aufnahme kann es sich z.B. um einen Schlüsselschacht handeln. Zweck der Zugriffskontrolle ist es sicherzustellen, dass nur ein autorisierter und eingewiesener Benutzer die Reinigungsvorrichtung bedient. Dies dient dazu, eine Fehlbedienung und ein damit verbundenes Schadensrisiko nicht nur für die Reinigungsvorrichtung, sondern auch für die Bedienperson oder Dritte zu vermeiden. Beispiele für eine Zugriffsberechtigung erfordernde Reinigungsvorrichtungen sind Scheuersaugmaschinen, fahrbare Kehrmaschinen sowie mittels eines Reinigungsstrahls arbeitende Reinigungsvorrichtungen, insbesondere beheizbare Hochdruckreinigungsgeräte oder Partikelstrahlgeräte wie Trockeneisstrahlgeräte.

Die Erfassung der Zugriffsberechtigung eines Berechtigungsträgers erfordert, dass der Berechtigungsträger in der genau einen Aufnahme positioniert wird. Dies führt dazu, dass die Erfassungseinheit mittels des mindestens einen Erfassungskontaktelementes die Zugriffsberechtigung kontaktiert und auf diese Weise erfasst. Beispielsweise kann das mindestens eine Erfassungskontaktelement die Zugriffsberechtigung elektrisch oder mechanisch kontaktieren.

In der EP 1 593 334 A2 ist eine gattungsgemäße Reinigungsvorrichtung beschrieben. Sie weist eine Aufnahme auf in Gestalt eines Zündschlosses. Ein Berechtigungsträger in Gestalt eines Zündschlüssels kann in das Zündschloss eingesteckt und das Zündschloss in eine Stellung EIN verbracht werden, um die Reinigungsvorrichtung in Betrieb zu nehmen.

Die GB 2 352 057 A beschreibt eine Vorrichtung, die mit Mietmaschinen, beispielsweise einer Mietplattform, verwendet werden kann. Die Vorrichtung kontrolliert selektiv Funktionen der Maschine, die dem Mieter zur Verfügung stehen. Ein Freischaltungsmittel wie beispielsweise eine Smartcard ist mit Informationen programmiert, die sich auf vorbestimmte Kriterien bezieht, beispielsweise die Funktionen der Maschine, die beantragt wurden. Die Maschine umfasst einen Kartenleser zum Lesen der Information von der Karte. Eine Masterkarte oder ein Masterschlüssel aktiviert alle Funktionen der Maschine.

Die WO 03/038764 A2 offenbart eine Sicherheitseinrichtung, die den kontrollierten Zugang oder Zugriff zu gefährdeten Sicherheitsbereichen von berechtigten Personen in einfacher Weise ermöglicht. Die Sicherheitseinrichtung ist mit einem Bussystem ausgestattet, das eine zentrale Steuereinrichtung mit mehreren Aktoren verbindet, die jeweils mindestens einem der Sicherheitsbereiche zugeordnet sind. Mit Hilfe einer Personenidentifikationseinrichtung wird die Zugangsberechtigung überprüft und gesteuert.

In der GB 2 353 180 A ist eine Sicherheitskarte beschrieben, die einen elektronischen Schlüssel umfasst und mit einer Kontrollvorrichtung beispielsweise eines Fahrzeugs kommuniziert. Der Schlüssel kann einen Identifizierungscode mittels einer Funkverbindung übertragen und kann programmiert sein, mehrere unterschiedliche Maschinen zu bedienen. Eine Maschine kann mittels mehrerer unterschiedlicher Schlüssel bedient werden.

Die DE 10 2004 006 947 A1 beschreibt eine Bedienanordnung einer mobilen Arbeitsmaschine, insbesondere eines Flurförderfahrzeuges, mit einem Multifunktionshebel zur Betätigung verschiedener Funktionen der Arbeitsmaschine.

Es sind mindestens zwei unterschiedliche Multifunktionshebel vorgesehen, die wahlweise lösbar an der Arbeitsmaschine befestigbar sind. Die Multifunktionshebel können sich in der Größe und/oder in der Form voneinander unterscheiden.

Die DE 1 096 242 betrifft ein Erkennungsmittel für Schlüssel oder ähnliche Gegenstände.

In der DE 297 20 720 U1 ist ein Personalisierungsmodul für Kraftfahrzeuge beschrieben. Das Personalisierungsmodul besteht aus einer miniaturisierbaren und tragbaren elektronischen Vorrichtung, durch welches sowohl Absperr- oder Schließelemente mindestens eines Kraftfahrzeuges entriegelbar sind, als auch eine Personalisierung des mindestens einen Kraftfahrzeuges durchführbar ist.

Aufgabe der vorliegenden Erfindung ist es, eine gattungsgemäße Reinigungsvorrichtung der bereitzustellen, die vielseitiger einsetzbar ist.

Diese Aufgabe wird erfindungsgemäß durch eine Reinigungsvorrichtung mit den Merkmalen von Anspruch 1 gelöst.

Die erfindungsgemäße Reinigungsvorrichtung umfasst zwei oder mehr Berechtigungsträger unterschiedlichen Berechtigungsprofils, wobei "Berechtigungsprofil des Berechtigungsträgers" vorliegend das mit der auf dem Berechtigungsträger hinterlegten Zugriffsberechtigung verknüpfte Berechtigungsprofil ist. Der Funktionsumfang der Reinigungsvorrichtung bestimmt sich anhand des Berechtigungsprofils. Je nachdem, welchen Berechtigungsträger eine Bedienperson zum Zugriff auf die Reinigungsvorrichtung einsetzt, kann die Bedienperson unterschiedliche Funktionen der Reinigungsvorrichtung ausführen. Dies erlaubt es beispielsweise, die Bedienperson je nach Erfahrung im Umgang mit der Reinigungsvorrichtung und/oder Aufgabenbereich mit unterschiedlichen Berechtigungsträgern auszustatten. So kann beispielsweise vorgesehen sein, dass ein für "normal erfahrene" Bedienpersonen vorgesehener Berechtigungsträger Zugriff auf die gängigsten Funktionen der Reinigungsvorrichtung gewährt. Beispielsweise kann eine "normal erfahrene" Bedienperson Funktionseinheiten der Reinigungsvorrichtung, etwa ein Reinigungswerkzeug, eine Schmutzaufnahmevorrichtung oder eine Reinigungsmitteldosiereinrichtung, benutzen, Bedienparameter dieser Funktionseinheiten aber nicht verändern. Erfahrenere Bedienpersonen können mit Berechtigungsträgern ausgestattet werden, deren Berechtigungsprofil Zugriff auf weitere Funktionen der Reinigungsvorrichtung gewährt. Beispielsweise können erfahrenere Benutzer auch Reinigungsparameter selbst einstellen, wie etwa Anpressdruck des Reinigungswerkzeuges oder die Menge an eingesetzter Reinigungsflüssigkeit. Schließlich können für Wartungspersonal vorgesehene Berechtigungsträger vorhanden sein, durch deren Einsatz der komplette Funktionsumfang der Reinigungsvorrichtung ausgeschöpft werden kann.

Zur Erfassung der unterschiedlichen Zugriffsberechtigungen der Berechtigungsträger unterschiedlichen Berechtigungsprofils ist außer der genau einen Aufnahme keine weitere Aufnahme vorhanden. Dies erlaubt eine konstruktiv einfache Ausgestaltung der Reinigungsvorrichtung und erleichtert der Bedienperson zugleich deren Bedienung. Unabhängig von dem Berechtigungsprofil kann sie den Berechtigungsträger in immer derselben Aufnahme positionieren, um Zugriff auf die Reinigungsvorrichtung zu erhalten.

Jeder Berechtigungsträger umfasst eine Kennzeichnungseinrichtung zum Bereitstellen einer dem jeweiligen Berechtigungsprofil des Berechtigungsträgers zugeordneten und von der Bedienperson anhand eines Sinnesorgans wahrnehmbaren Kennzeichnung, wobei sich unterschiedlichen Berechtigungsprofilen zugeordnete Kennzeichnungen voneinander unterscheiden. Dies erlaubt es der Bedienperson auf einfache Weise mittels eines Sinnesorgans feststellen, was für eine Art Berechtigungsprofil der Berechtigungsträger aufweist, d.h. mit der auf dem Berechtigungsträger hinterlegten Zugriffsberechtigung verknüpft ist. Es ist insbesondere nicht erforderlich, die Reinigungsvorrichtung in Betrieb zu nehmen, um widrigstenfalls sämtliche Berechtigungsträger dahingehend zu überprüfen, ob sie das von der Bedienperson erwartete Berechtigungsprofil aufweisen.

Von Vorteil ist es, dass die Kennzeichnungseinrichtungen optische Kennzeichnungseinrichtungen mit visuell wahrnehmbarer Kennzeichnung sind, d.h. die von der jeweiligen optischen Kennzeichnungseinrichtung bereitgestellte Kennzeichnung ist mittels des Sehsinns der Bedienperson erfassbar. Eine optische Kennzeichnungseinrichtung, beispielsweise eine Anzeigeeinheit, ermöglicht eine zuverlässige Wahrnehmung der Kennzeichnung.

Dabei ist die visuell wahrnehmbare Kennzeichnung eine Farbe, beispielsweise eine Grundfarbe wie z.B. gelb oder grün. Möglich ist auch ein bestimmter Farbton eines Farbsystems, beispielsweise ein bestimmter "Pantone"-Farbton. Eine farbliche Kennzeichnung des Berechtigungsträgers, die beispielsweise in teilweiser oder ganzer Einfärbung desselben vorliegen kann, ist besonders einfach und zuverlässig wahrnehmbar.

In ähnlicher Weise kann vorgesehen sein, dass die Kennzeichnung eine Farbe umfasst und beispielsweise in einer bestimmten räumlichen Anordnung einer Mehrzahl von Farben vorliegt, etwa einem Farbverlauf.

Günstig ist es, wenn das mindestens eine Erfassungskontaktelement ein Schaltelement bildet, das durch Kontakt mit der Zugriffsberechtigung betätigbar ist. Dadurch kann auf konstruktiv einfache Weise ein Kontakt zwischen der Zugriffsberechtigung und dem mindestens einen Erfassungskontaktelement zur Erfassung der Zugriffsberechtigung durch die Erfassungseinheit dienen. Das mindestens eine Schaltelement kann ein elektrisches und/oder mechanisches Schaltelement sein.

Bevorzugt weist die Erfassungseinheit zwei oder mehr Erfassungskontaktelemente auf, die zwei oder mehr in Abhängigkeit von der jeweiligen Zugriffsberechtigung eines Berechtigungsträgers betätigbare Schaltelemente bilden. Die zwei oder mehr Schaltelemente ermöglichen es, die unterschiedlichen Zugriffsberechtigungen zu erfassen, welche mit unterschiedlichen Berechtigungsprofilen verknüpft sind. Je nach Ausgestaltung der Zugriffsberechtigung auf dem jeweiligen Berechtigungsträger werden unterschiedliche der zwei oder mehr Erfassungskontaktelemente kontaktiert und damit unterschiedliche der zwei oder mehr Schaltelemente zur Erfassung der Zugriffsberechtigung betätigt.

Von Vorteil ist es, wenn die Reinigungsvorrichtung eine mit dem mindestens einen Schaltelement gekoppelte Steuereinheit umfasst, mit der die Betätigung des mindestens einen Schaltelementes detektierbar ist. Dies erlaubt es, die von der Erfassungseinheit anhand des mindestens einen Erfassungskontaktelementes erfasste Zugriffsberechtigung durch die Betätigung des mindestens einen Schaltelementes gewissermaßen an die Steuereinheit zu übermitteln. Unter Einsatz der Steuereinheit kann dann beispielsweise festgestellt werden, welches Berechtigungsprofil mit der erfassten Zugriffsberechtigung verknüpft ist.

Günstig ist es, wenn die Reinigungsvorrichtung eine mit der Steuereinheit gekoppelte Speichereinheit umfasst, in der das mit einer Zugriffsberechtigung verknüpfte Berechtigungsprofil hinterlegt ist. Nach Erfassen der Zugriffsberechtigung kann von der Steuereinheit aus der Speichereinheit das mit der jeweiligen Zugriffsberechtigung verknüpfte Berechtigungsprofil ausgelesen werden. Das Berechtigungsprofil erlaubt es der Steuereinheit festzustellen, welcher Funktionsumfang der Bedienperson unter Einsatz des eingesetzten Berechtigungsträgers bereitzustellen ist. Beispielsweise ist im Berechtigungsprofil gespeichert, wie Funktionseinheiten der Reinigungsvorrichtung, etwa ein Reinigungswerkzeug, eine Schmutzaufnahmeeinrichtung oder eine Reinigungsmitteldosiereinrichtung, berechtigungsprofilabhängig angesteuert werden können.

Bei einem Wartungspersonal vorbehaltenen Berechtigungsprofil kann vorgesehen sein, dass der Bedienperson Zugriff auf eine Schnittstelle gewährt wird, über welche Softwareaktualisierungen auf die Steuereinheit übertragen werden können. Möglich ist auch, dass der Bedienperson Zugriff auf eine Schnittstelle gewährt wird, über welche Informationen betreffend den Status der Reinigungsvorrichtung abgefragt und modifiziert werden können.

Günstig ist es, wenn die Berechtigungsträger als Schlüssel ausgestaltet sind und wenn die Aufnahme ein Schlüsselschacht für die Schlüssel ist. Dies ermöglicht eine einfache konstruktive Ausgestaltung der Reinigungsvorrichtung. Die Zugriffsberechtigung eines als Schlüssel ausgestalteten Berechtigungsträgers ist beispielsweise durch an diesem angeordnete Vorsprünge und/oder Rücksprünge und/oder Ausnehmungen gebildet.

Bevorzugt umfasst die Reinigungsvorrichtung mehrere Berechtigungsträger mit demselben Berechtigungsprofil, um eine Mehrzahl von Bedienpersonen mit einem Berechtigungsträger auszustatten, der Zugriff auf denselben Funktionsumfang der Reinigungsvorrichtung gewährt.

Vorzugsweise umfasst die Reinigungsvorrichtung mehrere Berechtigungsträger mit identischer darauf hinterlegter Zugriffsberechtigung. Auch dies erlaubt es, einer Mehrzahl von Bedienpersonen Zugriff auf die Reinigungsvorrichtung unter Bereitstellung desselben Funktionsumfanges zu ermöglichen.

Günstig ist es, wenn die Berechtigungsprofile der Berechtigungsträger aufeinander aufbauende Berechtigungsstufen definieren, wobei von der Reinigungsvorrichtung bei Vorliegen einer Berechtigungsstufe höherer Ordnung der Funktionsumfang einer Berechtigungsstufe niedrigerer Ordnung sowie mindestens eine zusätzliche Funktion bereitstellbar ist. Dies ermöglicht es, den Funktionsumfang abgestuft und bedarfsgerecht in Abhängigkeit vom Kenntnisstand und/oder Aufgabenbereich der Bedienperson bereitzustellen. Es kann insbesondere vorgesehen sein, dass die Anzahl der Berechtigungsträger einer Berechtigungsstufe höherer Ordnung geringer ist als die Anzahl der Berechtigungsträger einer niedrigeren Berechtigungsstufe. Dies trägt dem Umstand Rechnung, dass die Reinigungsvorrichtung üblicherweise von einer Mehrzahl "normal erfahrener" Benutzer bedient wird, aber nur von einer geringen Anzahl von zur Wartung autorisierten Personen.

Günstig ist es, wenn die Reinigungsvorrichtung mehrere Berechtigungsträger mit demselben Berechtigungsprofil umfasst und wenn die mehreren Berechtigungsträger identische Kennzeichnungen aufweisen, um die Handhabung der Berechtigungsträger und die Bedienung der Reinigungsvorrichtung zu erleichtern. Insbesondere lässt sich auf diese Weise eine eineindeutige Zuordnung der Kennzeichnung und der Berechtigungsprofile zueinander erzielen.

Vorzugsweise sind die Kennzeichnungen aller Berechtigungsträger anhand desselben Sinnesorgans wahrnehmbar, um Bedienpersonal den Umgang mit den Berechtigungsträgern und damit der Reinigungsvorrichtung zu erleichtern. Die Bedienperson kann sich dadurch schneller daran gewöhnen, dass anhand einer immer durch dasselbe Sinnesorgan wahrnehmbaren Kennzeichnung auf das Berechtigungsprofil geschlossen werden kann.

Es kann vorgesehen sein, dass mindestens eine Kennzeichnungseinrichtung eine haptische Kennzeichnungseinrichtung mit tastend wahrnehmbarer Kennzeichnung ist, welche Kennzeichnung mittels des Tastsinns der Bedienperson erfassbar ist. Auch eine derartige Kennzeichnung lässt sich in der Praxis benutzerfreundlich und zuverlässig erfassen. Die tastend wahrnehmbare Kennzeichnung umfasst beispielsweise am Berechtigungsträger gebildete Erhebungen und/oder Vertiefungen. Dies lässt sich konstruktiv einfach umsetzen. Es kann auch vorgesehen sein, dass eine tastend wahrnehmbare Kennzeichnung sich dadurch auszeichnet, dass der Berechtigungsträger keinerlei Erhebungen und/oder Vertiefungen umfasst und dementsprechend eine glatte Oberflächenbeschaffenheit aufweist.

Von Vorteil ist es, wenn die Kennzeichnung mindestens eines und bevorzugt aller Berechtigungsträger an einer Oberfläche des Berechtigungsträgers bzw. der Berechtigungsträger angeordnet ist. Dies erlaubt eine konstruktiv einfache sowie einfach wahrzunehmende Kennzeichnung des jeweiligen Berechtigungsträgers. Dessen Oberfläche bildet zumindest teilweise einen Kennzeichnungsbereich, an dem die Kennzeichnung angeordnet ist. Beispiele für an der Oberfläche gekennzeichnete Berechtigungsträger sind an der Oberfläche zumindest teilweise eingefärbte und/oder mit Vertiefungen und/oder Erhebungen versehene Berechtigungsträger. Die entsprechende Kennzeichnungseinrichtung eines solchen Berechtigungsträgers ist beispielsweise gebildet durch die Oberfläche einschließlich mindestens eines sich darauf befindenden kennzeichnenden Elementes, etwa einer Farbschicht, einer Erhebung oder einer Vertiefung in bestimmter räumlicher Anordnung.

Besonders bevorzugt erstreckt sich die Kennzeichnung über die gesamte Oberfläche des Berechtigungsträgers, allenfalls abgesehen von dessen Kanten, Ecken oder dergleichen. Hierbei handelt es sich um eine konstruktiv besonders einfache Art der Kennzeichnung, die zudem besonders zuverlässig durch die Bedienperson wahrnehmbar ist. Beispielsweise ist die gesamte Oberfläche des Berechtigungsträgers eingefärbt, wobei unterschiedliche Berechtigungsprofile aufweisende Berechtigungsträger unterschiedlich eingefärbt sind. In entsprechender Weise kann vorgesehen sein, dass die gesamte Oberfläche eines Berechtigungsträgers mit Vertiefungen und/oder Erhebungen versehen ist, wobei Berechtigungsträger unterschiedlichen Berechtigungsprofils andere Arten oder eine andere räumliche Anordnung von Erhebungen und/oder Vertiefungen umfassen oder gänzlich ohne Erhebungen und/oder Vertiefungen auskommen.

Von Vorteil ist es, dass die Reinigungsvorrichtung eine Wiedergabeeinrichtung umfasst zum Bereitstellen einer von der Bedienperson anhand eines Sinnesorgans wahrnehmbaren Berechtigungsinformation, die dem Berechtigungsprofil eines von der Bedienperson zum Zugriff auf die Reinigungsvorrichtung eingesetzten Berechtigungsträgers zugeordnet ist. Es ist eine einfache und zuverlässig wahrnehmbare Kontrollmöglichkeit für die Bedienperson gegeben, um festzustellen, ob das Berechtigungsprofil des von ihr eingesetzten Berechtigungsträgers das von ihr erwartete Berechtigungsprofil ist oder ob möglicherweise eine Fehlkennzeichnung des Berechtigungsträgers vorliegt.

In der Praxis erweist es sich als günstig, dass die Wiedergabeeinrichtung eine optische Anzeigeeinheit zum Bereitstellen einer visuell wahrnehmbaren Berechtigungsinformation umfasst. Die Berechtigungsinformation kann dadurch mittels des Sehsinns von der Bedienperson auf einfache Weise wahrgenommen werden. Als Anzeigeeinheit kann insbesondere eine an der Reinigungsvorrichtung vorhandene, Statusinformationen der Reinigungsvorrichtung anzeigende Anzeigeeinheit eingesetzt werden.

Vorzugsweise ist im Falle einer Kennzeichnung des Berechtigungsprofils des Berechtigungsträgers anhand einer Farbe die Berechtigungsinformation eine Anzeigefarbe der Anzeigeeinheit. Hierbei kann es sich um eine Hintergrundfarbe oder um eine Vordergrundfarbe - etwa eine Textfarbe - der Anzeigeeinheit handeln.

Bevorzugt stimmen die Farbe der Kennzeichnung und die Anzeigefarbe der Anzeigeeinheit überein, um der Bedienperson eine einfache und intuitive Wahrnehmung der Berechtigungsinformation zu ermöglichen. Insbesondere kann vorgesehen sein, dass bei farblicher Kennzeichnung des Berechtigungsprofils auf jedem Berechtigungsträger die Berechtigungsinformation in jedem Fall eine mit der Kennzeichnungsfarbe übereinstimmende Anzeigefarbe ist.

Eine erfindungsgemäße Reinigungsvorrichtung kann als Bodenreinigungsmaschine ausgestaltet sein, beispielsweise als eine Scheuersaugmaschine oder eine fahrbare Kehrmaschine, beide sowohl als sogenannte "Walk-behind"-Maschinen, bei denen die Bedienperson die Maschinen von der Rückseite steuert, als auch als Aufsitzmaschinen.

Die nachfolgende Beschreibung einer bevorzugten Ausführungsform der Erfindung dient im Zusammenhang mit der Zeichnung der näheren Erläuterung der Erfindung. Es zeigen:
- Figur 1:: eine perspektivische Ansicht einer erfindungsgemäßen Reinigungsvorrichtung;
- Figur 2:: eine Draufsicht auf eine Bedieneinheit der Reinigungsvorrichtung aus Figur 1, umfassend eine Aufnahme für Berechtigungsträger;
- Figur 3A:: eine Schnittansicht längs der Linie 3-3 in Figur 2 ohne in der Aufnahme positionierten Berechtigungsträger;
- Figur 3B:: eine Schnittansicht längs der Linie 3-3 in Figur 2, wobei in der Aufnahme ein Berechtigungsträger positioniert ist;
- Figur 4:: eine Gruppe von drei Berechtigungsträgern unterschiedlichen Berechtigungsprofils in schematischer Darstellung, die jeweils Zugriff auf die Reinigungsvorrichtung aus Figur 1 gewähren und
- Figur 5:: ein Blockschaltbild elektrisch wirksamer Komponenten der Reinigungsvorrichtung aus Figur 1.

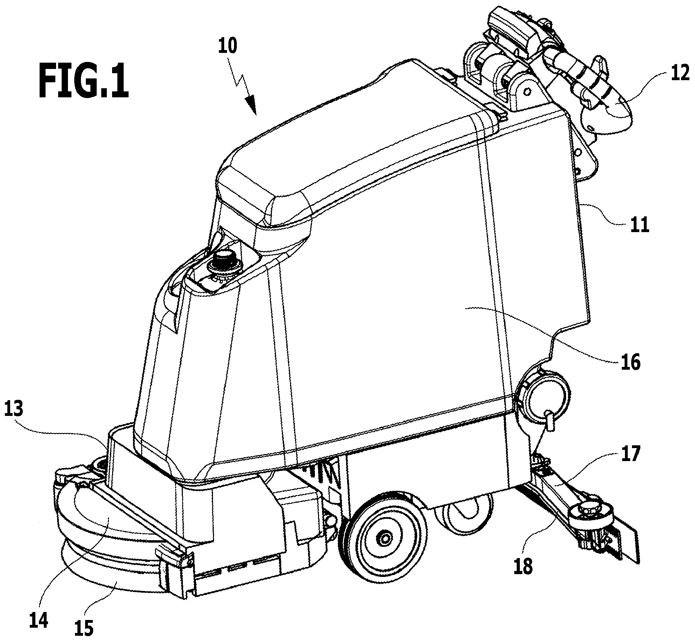

Eine bevorzugte Ausführungsform einer erfindungsgemäßen Reinigungsvorrichtung ist als in Figur 1 perspektivisch dargestellte und darin insgesamt mit dem Bezugszeichen 10 belegte Scheuersaugmaschine ausgestaltet. Bei der Scheuersaugmaschine 10 handelt es sich um eine sogenannte "Walk-behind"-Maschine, die eine Bedienperson von ihrer Rückseite 11 unter Zuhilfenahme einer daran angeordneten Bedieneinheit 12 steuert.

An ihrer Vorderseite 13 weist die Scheuersaugmaschine 10 ein Reinigungswerkzeug 14 auf mit einer rotierenden Tellerbürste 15, mit der Verschmutzungen von einer zu reinigenden Bodenfläche abgelöst werden können. Zur Steigerung der Reinigungswirkung kann die Bodenfläche mit einer in einem Tank 16 enthaltenen Reinigungsflüssigkeit wie Wasser beaufschlagt werden. An der Rückseite 11 umfasst die Scheuersaugmaschine 10 eine Schmutzaufnahmevorrichtung 17 in Gestalt einer Saugleiste 18 zum Aufsaugen des Gemisches aus abgelöstem Schmutz und Wasser von der Bodenfläche.

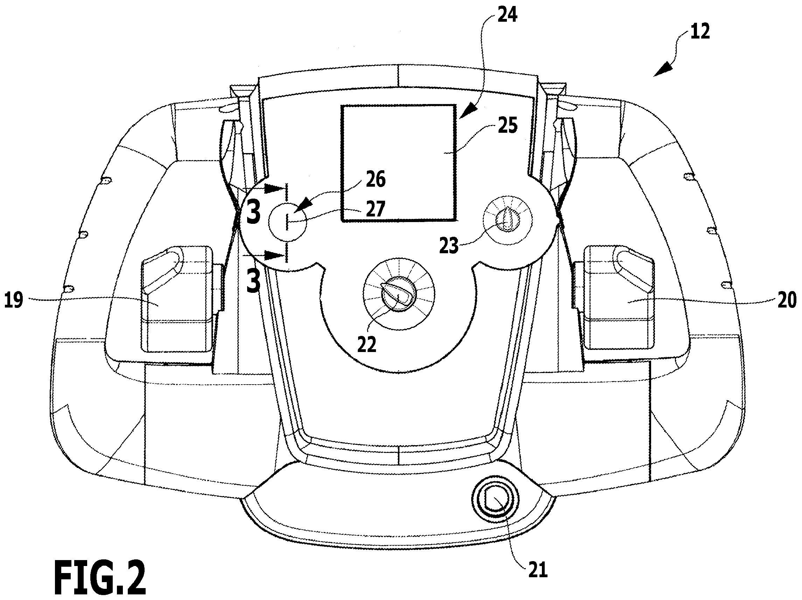

Die in Figur 2 in Draufsicht dargestellte Bedieneinheit 12 umfasst eine Mehrzahl von Bedienelementen 19 bis 23, auf die nachfolgend nicht näher eingegangen wird, zur Entgegennahme von Bedienanweisungen durch eine Bedienperson. Ferner umfasst die Bedieneinheit 12 eine Wiedergabeeinrichtung 24 mit einer optischen Anzeigeeinheit 25, mit der Informationen den Zustand der Scheuersaugmaschine 10 betreffend darstellbar sind. Die Anzeigeeinheit 25 umfasst insbesondere ein Farbdisplay, welches eine Vielzahl von Farben darstellen kann.

Ferner umfasst die Bedieneinheit 12 eine einzige Aufnahme 26 für Berechtigungsträger, die zum Zugriff auf die Scheuersaugmaschine 10 erforderlich sind.

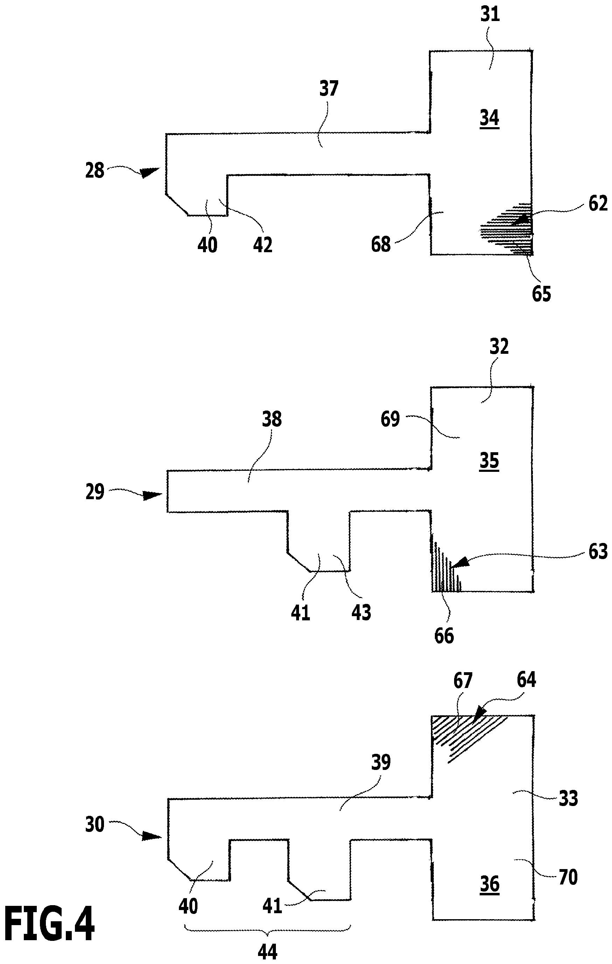

Die Scheuersaugmaschine 10 umfasst insgesamt drei Berechtigungsträger 28 bis 30, die in Figur 4 schematisch dargestellt sind. Die Berechtigungsträger 28 bis 30 sind jeweils als mechanischer Schlüssel 31, 32 bzw. 33 ausgestaltet. Jeder der Schlüssel 31 bis 33 umfasst ein Griffelement 34, 35 bzw. 36. Von den Griffelementen 34 bis 36 stehen Trägerelemente 37, 38 bzw. 39 ab für an den Schlüsseln 31 bis 33 jeweils gebildete Vorsprünge. Während der Schlüssel 33 zwei voneinander beabstandete Vorsprünge 40 und 41 umfasst, umfasst der Schlüssel 31 nur den Vorsprung 40, und der Schlüssel 32 umfasst nur den Vorsprung 41.

Der Vorsprung 40 des Schlüssels 31 bildet dessen Zugriffsberechtigung 32 zum Zugriff auf die Scheuersaugmaschine 10. In entsprechender Weise bildet der Vorsprung 41 des Schlüssels 32 dessen Zugriffsberechtigung 43 zum Zugriff auf die Scheuersaugmaschine 10. Die Vorsprünge 40 und 41 bilden gemeinsam eine Zugriffsberechtigung 44 des Schlüssels 33 zum Zugriff auf die Scheuersaugmaschine 10.

Quer zur Einführrichtung der Schlüssel 31 bis 33 in den Schlüsselschacht 27 zweigen von diesem zwei Ausnehmungen 45 und 46 ab. In den Ausnehmungen 45 und 46 sind Erfassungskontaktelemente 47 bzw. 48 quer zur Einführrichtung der Schlüssel 31 bis 33 verschieblich gelagert. Mittels in der Zeichnung nicht dargestellter Vorspannelemente sind die Erfassungskontaktelemente 47 und 48 in Richtung auf den Schlüsselschacht 27 vorgespannt. Dabei ist ihr Bewegungsumfang in Richtung des Schlüsselschachtes 27 durch in der Zeichnung ebenfalls nicht dargestellte Anschläge begrenzt.

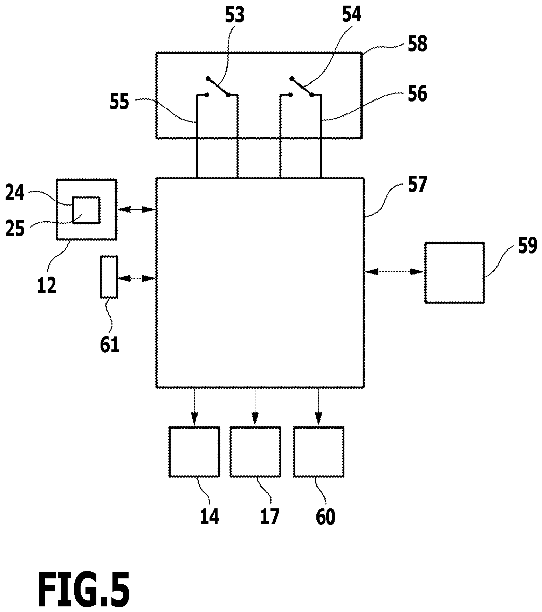

Die Erfassungskontaktelemente 47 und 48 umfassen dem Schlüsselschacht 27 abgewandt jeweils einen elektrischen Kontakt 49 bzw. 50. Die Kontakte 49 und 50 können mit am Boden der Ausnehmungen 45 und 46 angeordneten elektrischen Kontakten 51 bzw. 52 zusammenwirken, um eine elektrische Verbindung herzustellen. Auf diese Weise bilden diese Erfassungskontaktelemente 47 und 48 Schaltelemente 53 bzw. 54, die in elektrische Schaltleitungen 55 bzw. 56 geschaltet sind. Die Schaltleitungen 55 und 56 kontaktieren die Kontakte 49 und 51 bzw. 50 und 52. Über die Schaltleitungen 55 und 56 sind die Schaltelemente 53 und 54 mit einer in Figur 5 schematisch dargestellten Steuereinheit 57 der Scheuersaugmaschine 10 gekoppelt.

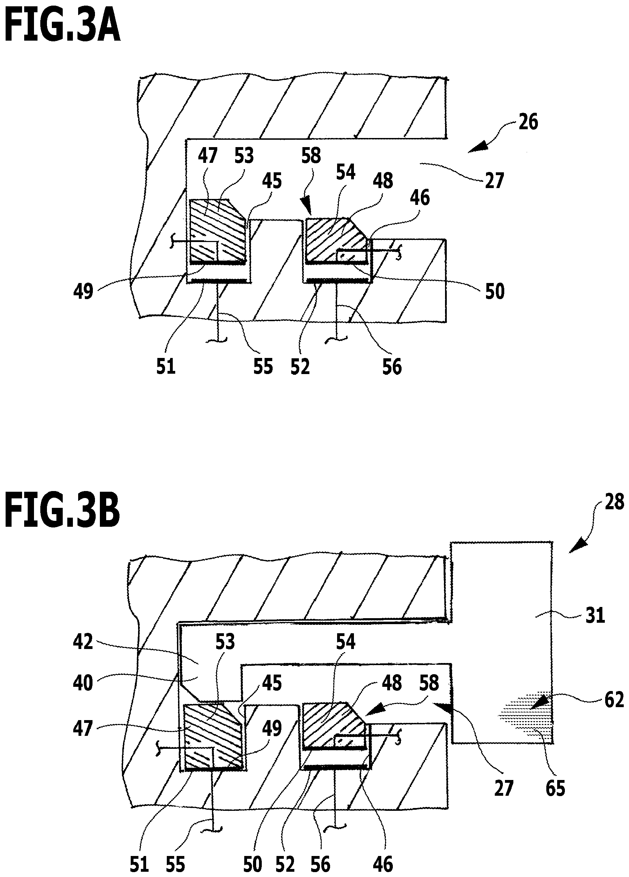

Die Schaltelemente 53 und 54 bilden zusammen mit den elektrischen Kontakten 51 und 52 eine an der Aufnahme 26 angeordnete Erfassungseinheit 58 zum kontaktbehafteten Erfassen der Zugriffsberechtigungen 42 bis 44 der Schlüssel 31 bis 33. Dies ist in Figur 3B beispielhaft anhand des Schlüssels 31 dargestellt. Wird der Schlüssel 31 in den Schlüsselschacht 27 eingeführt, gelangt der Vorsprung 40 in mechanischen Kontakt mit dem Erfassungskontaktelement 47. Das Erfassungskontaktelement 47 wird in der Ausnehmung 45 verschoben, so dass das Schaltelement 53 betätigt wird. Die Betätigung des Schaltelementes 53 kann mittels der Steuereinheit 57 als Kurzschluss der Schaltleitung 55 detektiert werden. Auf diese Weise kann die Zugriffsberechtigung 42 des Schlüssels 31 der Steuereinheit 57 übermittelt werden.

In entsprechender Weise kann die Zugriffsberechtigung 43 des Schlüssels 32 an die Steuereinheit 57 übermittelt werden. Wird der Schlüssel 32 in den Schlüsselschacht 27 eingeführt, kontaktiert der Vorsprung 41 das Erfassungskontaktelement 48. Die daraus resultierende Betätigung des Schaltelementes 54 kann von der Steuereinheit 57 als Kurzschluss der Schaltleitung 56 erfasst werden.

Weiter kann in entsprechender Weise die Zugriffsberechtigung 44 des Schlüssels 33 erfasst werden. Wird der Schlüssel 33 in den Schlüsselschacht 27 eingeführt, kontaktieren die Vorsprünge 40 und 41 die Erfassungskontaktelemente 47 und 48. Die daraus resultierenden Betätigungen der Schaltelemente 53 bzw. 54 können von der Steuereinheit 57 als Kurzschlüsse der Schaltleitung 55 bzw. 56 erfasst werden.

Wie vorstehende Beschreibung zeigt, kann mittels der Erfassungseinheit 58 an nur einer einzigen Aufnahme 26 eine Mehrzahl von Zugriffsberechtigungen 42 bis 44 der Schlüssel 31 bis 33 erfasst werden. Je nachdem, welche der Schaltelemente 53 und/oder 54 betätigt werden, kann die Steuereinheit 57 die Zugriffsberechtigung 42, 43 oder 44 ermitteln und feststellen, welchen der Schlüssel 31, 32 oder 33 die Bedienperson zum Zugriff auf die Scheuersaugmaschine 10 einsetzt.

Ein Zugriff auf die Scheuersaugmaschine 10 ist nicht möglich, ohne dass zumindest eines der Schaltelemente 53 oder 54 aktiviert ist. Es ist daher in jedem Fall ein Berechtigungsträger zum Zugriff auf die Scheuersaugmaschine 10 mit gültiger Zugriffsberechtigung erforderlich.

Die Steuereinheit 57 steht mit einer Speichereinheit 59 der Scheuersaugmaschine 10 in Wirkverbindung. In der Speichereinheit 59 sind unterschiedliche Berechtigungsprofile hinterlegt, wobei jede der Zugriffsberechtigungen 42 bis 44 mit einem unterschiedlichen Berechtigungsprofil verknüpft ist. Im jeweiligen Berechtigungsprofil ist gespeichert, welche der insgesamt zur Verfügung stehenden Funktionen der Scheuersaugmaschine 10 von der den jeweils eingesetzten Schlüssel 31 bis 33 innehabenden Bedienperson ausgeführt werden können.

Beispielsweise kann vorgesehen sein, dass im Berechtigungsprofil gespeichert ist, dass die Bedienperson nur ausgewählte Funktionseinheiten der Scheuersaugmaschine 10 benutzen kann. Funktionseinheiten der Scheuersaugmaschine 10 sind z.B. das Reinigungswerkzeug 14 und die Schmutzaufnahmevorrichtung 17, die ebenso von der Steuereinheit 25 ansteuerbar sind wie eine Reinigungsmitteldosiereinrichtung 60 (in Figur 5 schematisch gezeigt). Mittels der Reinigungsmitteldosiereinrichtung 60 kann die Menge an die Bodenfläche beaufschlagender Reinigungsflüssigkeit sowie die Menge und Art einer dieser Reinigungsflüssigkeit zugesetzten Reinigungschemikalie eingestellt werden.

Denkbar ist auch, dass im Berechtigungsprofil gespeichert ist, dass die Bedienperson Funktionseinheiten wie das Reinigungswerkzeug 14, die Schmutzaufnahmevorrichtung 17 oder die Reinigungsmitteldosiereinrichtung 60 mit aktuellen Reinigungsparametern verwenden kann, diese Reinigungsparameter aber nicht verändern kann. Beispielsweise für Reinigungsparameter sind der Anpressdruck der Tellerbürste 15 auf die Bodenfläche, der die Saugleiste 18 beaufschlagende Unterdruck zur Aufnahme von Schmutzflüssigkeit oder die Menge einer der Reinigungsflüssigkeit zugesetzten Reinigungschemikalie.

Möglich ist auch, dass im Berechtigungsprofil gespeichert ist, ob die Bedienperson befugt ist, Softwareaktualisierungen über eine in Figur 5 schematisch dargestellte Schnittstelle 61 auf die Steuereinheit 57 zu übertragen oder über die Schnittstelle 61 elektronisch den Status einer Scheuersaugmaschine 10 abzufragen, z.B. ein in der Speichereinheit 59 gespeichertes Fehlerprotokoll auszulesen.

Das Vorsehen des mit der jeweiligen Zugriffsberechtigung 42 bis 44 verknüpften Berechtigungsprofils erlaubt es, Bedienpersonen beispielsweise je nach Aufgabenbereich, Kenntnisstand sowie Erfahrung im Umgang mit der Scheuersaugmaschine 10 das Ausführen unterschiedlicher Funktionen der Scheuersaugmaschine 10 zu ermöglichen. Abhängig vom jeweiligen Berechtigungsprofil wird dabei von der Scheuersaugmaschine 10 der Bedienperson ein anderer Funktionsumfang bereitgestellt.

Im vorliegenden Fall unterscheiden sich die Schlüssel 31 bis 33 hinsichtlich ihrer Berechtigungsprofile dadurch, dass der Schlüssel 31 mit der Zugriffsberechtigung 42 für nur "normal erfahrene" Bedienpersonen vorgesehen ist. Er gewährt nur Zugriff auf einen Funktionsumfang, der elementare Grundfunktionen der Scheuersaugmaschine 10 abdeckt, z.B. den Einsatz des Reinigungswerkzeuges 14, der Schmutzaufnahmevorrichtung 17 sowie der Reinigungsmitteldosiereinrichtung 60.

Demgegenüber ist der Schlüssel 32 mit der Zugriffsberechtigung 43 für erfahrenere Bedienpersonen vorgesehen, mit dessen Berechtigungsprofil auf alle gängigen Funktionen der Scheuersaugmaschine 10 zugegriffen werden kann. Insbesondere können Reinigungsparameter des Reinigungswerkzeugs 14, der Schmutzaufnahmevorrichtung 17 sowie der Reinigungsmitteldosiereinrichtung 60 verändert werden.

Der Schlüssel 33 mit der Zugriffsberechtigung 44 ist allein Wartungspersonal vorbehalten. Mit seinem Berechtigungsprofil kann auf sämtliche Funktionen der Scheuersaugmaschine 10 zugegriffen werden, beispielsweise auch auf die Schnittstelle 61.

Wie vorstehende Beschreibung zeigt, definieren die Berechtigungsprofile der Schlüssel 31 bis 33 insbesondere aufeinander aufbauende Berechtigungsstufen, wobei eine Berechtigungsstufe höherer Ordnung den Funktionsumfang einer Berechtigungsstufe niedrigerer Ordnung sowie mindestens eine weitere Funktion der Scheuersaugmaschine 10 umfasst.

Es kann vorgesehen sein, dass die Scheuersaugmaschine 10 mehr als nur einen Schlüssel mit einer bestimmten Zugriffsberechtigung umfasst. Typischerweise wird die Scheuersaugmaschine 10 viele Schlüssel des Typs 31 umfassen, eine geringere Anzahl von Schlüsseln des Typs 32 sowie eine noch geringere Anzahl von Schlüsseln des Typs 33.

Damit eine Bedienperson auf besonders einfache Weise und zuverlässig erkennen kann, welches Berechtigungsprofil der jeweilige Schlüssel 31, 32 oder 33 aufweist, umfassen alle Schlüssel 31 bis 33 Kennzeichnungseinrichtungen 62, 63 bzw. 64 gleicher Art. Mittels der Kennzeichnungseinrichtungen 62 bis 64 werden der Bedienperson Kennzeichnungen 65, 66 bzw. 67 bereitgestellt, die von der Bedienperson mittels eines Sinnesorgans wahrgenommen werden können und dem jeweiligen Berechtigungsprofil der Schlüssel 31, 32 bzw. 33 zugeordnet sowie mit der jeweiligen Zugriffsberechtigung 42, 43 bzw. 44 verknüpft sind.

Alle Kennzeichnungseinrichtungen 62 bis 64 sind optische Kennzeichnungseinrichtungen, deren Kennzeichnungen 65 bis 67 durch den Sehsinn wahrnehmbar sind. Die Kennzeichnungen 65 bis 67 sind insbesondere Farbkennzeichnungen, die darin bestehen, dass die Schlüssel 31, 32 bzw. 33 eingefärbt sind, d.h. die Kennzeichnungen 65 bis 67 bestehen jeweils in auf Oberflächen 68, 69 bzw. 70 der Schlüssel 31, 32 bzw. 33 aufgetragener Farbe. Die Kennzeichnungseinrichtungen 62 bis 64 werden gebildet durch die Oberflächen 68 bis 70 mit den sich darauf befindenden, den jeweiligen Farbeindruck hervorrufenden Farbschichten.

Die farblichen Kennzeichnungen 65 bis 67, in Figur 4 schematisch dargestellt durch unterschiedliche Schraffuren, erstrecken sich jeweils über die kompletten Oberflächen 68, 69 bzw. 70. Dadurch können sie von der Bedienperson auf besonders einfache Weise visuell unabhängig davon wahrgenommen werden, wie der jeweilige Schlüssel 31, 32 bzw. 33 betrachtet wird. Gewissermaßen bilden die Oberflächen 68 bis 70 Kennzeichnungsbereiche der Kennzeichnungseinrichtungen 62 bis 64.

Beispielsweise besteht die Kennzeichnung 65 im vorliegenden Fall in einer gelben Farbe, die Kennzeichnung 66 in einer roten Farbe und die Kennzeichnung 67 in einer grauen Farbe. "Farbe" kann vorliegend sowohl allgemein eine Grundfarbe bedeuten als auch einen bestimmten Farbton, beispielsweise im "Pantone"-Farbsystem.

Durch die visuell auf einfache Weise wahrnehmbare farbliche Kennzeichnung können die Schlüssel 31 bis 33 von der Bedienperson leicht auseinander gehalten werden, was deren Handhabung und damit die Handhabung der Scheuersaugmaschine 10 insgesamt vereinfacht.

Sind zwei oder mehr Schlüssel desselben Berechtigungsprofils vorgesehen, weisen sie, auch bei unterschiedlicher Zugriffsberechtigung, vorzugsweise dieselbe Kennzeichnung auf. Dadurch besteht eine eineindeutige Zuordnung des Berechtigungsprofils zur Kennzeichnung, was den Umgang mit den Berechtigungsträgern der Scheuersaugmaschine 10 weiter vereinfacht.

Die Bedieneinheit 12 steht in Wirkverbindung mit der Steuereinheit 57, und insbesondere ist die Anzeigeeinheit 25 von der Steuereinheit 57 ansteuerbar. Ist der Steuereinheit 57 das Berechtigungsprofil des jeweiligen Schlüssels 31, 32 oder 33 bekannt, steuert sie die Anzeigeeinheit 25 dahingehend an, eine Berechtigungsinformation bereitzustellen, die mit dem Berechtigungsprofil des eingesetzten Schlüssels verknüpft ist.

Vorliegend besteht die Berechtigungsinformation in einer Anzeigefarbe der Anzeigeeinheit 25, welche mit der Farbe der jeweiligen Kennzeichnung 65 bis 67 übereinstimmt. "Anzeigefarbe" kann vorliegend die Hintergrundfarbe der Anzeigeeinheit 25 sein oder deren Vordergrundfarbe, z.B. für einen auf der Anzeigeeinheit 25 ausgegebenen Text. Die Berechtigungsinformation hat beispielsweise den Zweck festzustellen, ob der jeweils eingesetzte Berechtigungsträger korrekt gekennzeichnet ist. Weicht die Anzeigefarbe von der Farbe der jeweiligen Kennzeichnung des Berechtigungsträgers ab, liegt eine Fehlkennzeichnung vor. Die Bedienperson kann daraufhin eine Korrektur der Kennzeichnung vornehmen lassen.

## Patentansprüche

1. Reinigungsvorrichtung, umfassend mindestens einen Berechtigungsträger (28, 29, 30) mit darauf hinterlegter Zugriffsberechtigung (42, 43, 44), die zum Zugriff auf die Reinigungsvorrichtung (10) erforderlich ist, genau eine Aufnahme (26), in der der mindestens eine Berechtigungsträger (28, 29, 30) positionierbar ist, sowie eine an der Aufnahme (26) angeordnete Erfassungseinheit (58) zum kontaktbehafteten Erfassen der Zugriffsberechtigung (42, 43, 44) eines in der Aufnahme (26) positionierten Berechtigungsträgers (28, 29, 30), wobei die Erfassungseinheit (58) mindestens ein die Zugriffsberechtigung (42, 43, 44) kontaktierendes Erfassungskontaktelement (47, 48) aufweist, **dadurch gekennzeichnet, dass** die Reinigungsvorrichtung (10) zwei oder mehr Berechtigungsträger (28, 29, 30) mit darauf hinterlegten Zugriffsberechtigungen (42, 43, 44) umfasst, die mit unterschiedlichen Berechtigungsprofilen verknüpft sind, wobei einer Bedienperson von der Reinigungsvorrichtung (10) ein vom mit einer Zugriffsberechtigung (42, 43, 44) verknüpften Berechtigungsprofil abhängiger Funktionsumfang bereitstellbar ist, dass jeder Berechtigungsträger (28, 29, 30) eine Kennzeichnungseinrichtung (62, 63, 64) umfasst zum Bereitstellen einer dem jeweiligen Berechtigungsprofil des Berechtigungsträgers (28, 29, 30) zugeordneten und von der Bedienperson anhand eines Sinnesorgans wahrnehmbaren Kennzeichnung (65, 66, 67), wobei sich unterschiedlichen Berechtigungsprofilen zugeordnete Kennzeichnungen (65, 66, 67) voneinander unterscheiden, dass die Kennzeichnungseinrichtungen (62, 63, 64) optische Kennzeichnungseinrichtungen (62, 63, 64) mit visuell wahrnehmbarer Kennzeichnung (65, 66, 67) sind, wobei die visuell wahrnehmbare Kennzeichnung (65, 66, 67) eine Farbe ist, und dass die Reinigungsvorrichtung (10) eine Wiedergabeeinrichtung (24) mit einer ansteuerbaren optischen Anzeigeeinheit (25) umfasst zum Bereitstellen einer von der Bedienperson visuell wahrnehmbaren Berechtigungsinformation, die dem Berechtigungsprofil eines von der Bedienperson zum Zugriff auf die Reinigungsvorrichtung (10) eingesetzten Berechtigungsträgers (28, 29, 30) zugeordnet ist, für eine zuverlässig wahrnehmbare Kontrollmöglichkeit für die Bedienperson, festzustellen, ob das Berechtigungsprofil eines eingesetzten Berechtigungsträgers (28, 29, 30) das von der Bedienperson erwartete Berechtigungsprofil ist.

2. Reinigungsvorrichtung nach Anspruch 1, **dadurch gekennzeichnet, dass** das mindestens eine Erfassungskontaktelement (47) ein Schaltelement (53) bildet, das durch Kontakt mit der Zugriffsberechtigung (42, 43, 44) betätigbar ist.

3. Reinigungsvorrichtung nach Anspruch 2, **dadurch gekennzeichnet, dass** die Erfassungseinheit (58) zwei oder mehr Erfassungskontaktelemente (47, 48) aufweist, die zwei oder mehr in Abhängigkeit von der jeweiligen Zugriffsberechtigung (42, 43, 44) eines Berechtigungsträgers (28, 29, 30) betätigbare Schaltelemente (53, 54) bilden.

4. Reinigungsvorrichtung nach Anspruch 2 oder 3, **dadurch gekennzeichnet, dass** die Reinigungsvorrichtung (10) eine mit dem mindestens einen Schaltelement (53, 54) gekoppelte Steuereinheit (57) umfasst, mit der die Betätigung des mindestens einen Schaltelementes (53, 54) detektierbar ist.

5. Reinigungsvorrichtung nach Anspruch 4, **dadurch gekennzeichnet, dass** die Reinigungsvorrichtung (10) eine mit der Steuereinheit (57) gekoppelte Speichereinheit (59) umfasst, in der das mit einer Zugriffsberechtigung (42, 43, 44) verknüpfte Berechtigungsprofil hinterlegt ist.

6. Reinigungsvorrichtung nach einem der voranstehenden Ansprüche, **dadurch gekennzeichnet, dass** die Berechtigungsträger (28, 29, 30) als Schlüssel (31, 32, 33) ausgestaltet sind und dass die Aufnahme (26) ein Schlüsselschacht (27) für die Schlüssel (31, 32, 33) ist.

7. Reinigungsvorrichtung nach einem der voranstehenden Ansprüche, **dadurch gekennzeichnet, dass** die Reinigungsvorrichtung (10) mehrere Berechtigungsträger (28, 29, 30) mit demselben Berechtigungsprofil umfasst.

8. Reinigungsvorrichtung nach einem der voranstehenden Ansprüche, **dadurch gekennzeichnet, dass** die Reinigungsvorrichtung (10) mehrere Berechtigungsträger (28, 29, 30) mit identischer darauf hinterlegter Zugriffsberechtigung (42, 43, 44) umfasst.

9. Reinigungsvorrichtung nach einem der voranstehenden Ansprüche, **dadurch gekennzeichnet, dass** die Berechtigungsprofile der Berechtigungsträger (28, 29, 30) aufeinander aufbauende Berechtigungsstufen definieren, wobei von der Reinigungsvorrichtung (10) bei Vorliegen einer Berechtigungsstufe höherer Ordnung der Funktionsumfang einer Berechtigungsstufe niedrigerer Ordnung sowie mindestens eine zusätzliche Funktion bereitstellbar ist.

10. Reinigungsvorrichtung nach einem der voranstehenden Ansprüche, **dadurch gekennzeichnet, dass** die Reinigungsvorrichtung (10) mehrere Berechtigungsträger (28, 29, 30) mit demselben Berechtigungsprofil umfasst und dass die mehreren Berechtigungsträger (28, 29, 30) identische Kennzeichnungen (65, 66, 67) aufweisen.

11. Reinigungsvorrichtung nach einem der voranstehenden Ansprüche, **dadurch gekennzeichnet, dass** die Kennzeichnung (65, 66, 67) mindestens eines Berechtigungsträgers (28, 29, 30) an einer Oberfläche (68, 69, 70) des Berechtigungsträgers (28, 29, 30) angeordnet ist.

12. Reinigungsvorrichtung nach Anspruch 11, **dadurch gekennzeichnet, dass** sich die Kennzeichnung (65, 66, 67) über die gesamte Oberfläche (68, 69, 70) des Berechtigungsträgers (28, 29, 30) erstreckt.

## Claims

1. Cleaning appliance comprising at least one authorization carrier (28, 29, 30) with an access authorization (42, 43, 44) which is provided thereon and is required for accessing the cleaning appliance (10), just one receptacle (26) in which the at least one authorization carrier (28, 29, 30) is positionable, and a detection unit (58), situated at the receptacle (26), for contact-based detection of the access authorization (42, 43, 44) of an authorization carrier (28, 29, 30) positioned in the receptacle (26), the detection unit (58) having at least one detection contact element (47, 48) which contacts the access authorization (42, 43, 44), **characterized in that** the cleaning appliance (10) comprises two or more authorization carriers (28, 29, 30) with access authorizations (42, 43, 44) provided thereon which are linked to different authorization profiles, wherein a range of functions dependent on the authorization profile linked to an access authorization (42, 43, 44) can be provided to an operator by the cleaning appliance (10), that each authorization carrier (28, 29, 30) comprises an identification device (62, 63, 64) for providing an identifier (65, 66, 67) which is associated with the particular authorization profile of the authorization carrier (28, 29, 30) and which is perceivable by the operator using a sensory organ, wherein identifiers (65, 66, 67) associated with different authorization profiles are different from one another, that the identification devices (62, 63, 64) are optical identification devices (62, 63, 64) having a visually perceivable identifier (65, 66, 67), wherein the visually perceivable identifier (65, 66, 67) is a color, and that the cleaning appliance (10) comprises a playback device (24) with a controllable optical display unit (25) for providing an authorization information that is visually perceivable by the operator, which authorization information is associated with the authorization profile of an authorization carrier (28, 29, 30) used by the operator for accessing the cleaning appliance (10), for a reliably perceivable control option for the operator to determine whether the authorization profile of an authorization carrier (28, 29, 30) being used is the authorization profile expected by the operator.

2. Cleaning appliance according to Claim 1, **characterized in that** the at least one detection contact element (47) forms a switching element (53) which is activatable by contact with the access authorization (42, 43, 44).

3. Cleaning appliance according to Claim 2, **characterized in that** the detection unit (58) has two or more detection contact elements (47, 48) which form two or more switching elements (53, 54) that are activatable in dependence on the particular access authorization (42, 43, 44) of an authorization carrier (28, 29, 30).

4. Cleaning appliance according to Claim 2 or 3, **characterized in that** the cleaning appliance (10) comprises a control unit (57), coupled to the at least one switching element (53, 54), by means of which the activation of the at least one switching element (53, 54) is detectable.

5. Cleaning appliance according to Claim 4, **characterized in that** the cleaning appliance (10) comprises a memory unit (59) which is coupled to the control unit (57) and which stores the authorization profile linked to an access authorization (42, 43, 44).

6. Cleaning appliance according to one of the preceding claims, **characterized in that** the authorization carriers (28, 29, 30) are configured as keys (31, 32, 33), and that the receptacle (26) is a key slot (27) for the keys (31, 32, 33).

7. Cleaning appliance according to one of the preceding claims, **characterized in that** the cleaning appliance (10) comprises a plurality of authorization carriers (28, 29, 30) having the same authorization profile.

8. Cleaning appliance according to one of the preceding claims, **characterized in that** the cleaning appliance (10) comprises a plurality of authorization carriers (28, 29, 30) having identical access authorizations (42, 43, 44) provided thereon.

9. Cleaning appliance according to one of the preceding claims, **characterized in that** the authorization profiles of the authorization carriers (28, 29, 30) define authorization stages which build on one another, whereby when a higher-order authorization stage is present, the cleaning appliance (10) may provide the range of functions of a lower-order authorization stage and at least one additional function.

10. Cleaning appliance according to one of the preceding claims, **characterized in that** the cleaning appliance (10) comprises a plurality of authorization carriers (28, 29, 30) having the same authorization profile, and that the plurality of authorization carriers (28, 29, 30) has identical identifiers (65, 66, 67).

11. Cleaning appliance according to one of the preceding claims, **characterized in that** the identifier (65, 66, 67) of at least one authorization carrier (28, 29, 30) is situated on a surface (68, 69, 70) of the authorization carrier (28, 29, 30).

12. Cleaning appliance according to Claim 11, **characterized in that** the identifier (65, 66, 67) extends over the entire surface (68, 69, 70) of the authorization carrier (28, 29, 30).

## Revendications

1. Appareil de nettoyage comprenant au moins un support d'autorisation (28, 29, 30) sur lequel est enregistrée une autorisation d'accès (42, 43, 44), qui est nécessaire pour l'accès à l'appareil de nettoyage (10), exactement un logement d'accueil (26) dans lequel peut être positionné ledit au moins un support d'autorisation (28, 29, 30), ainsi qu'une unité d'acquisition (58) agencée au niveau du logement d'accueil (26) et destinée à l'acquisition, par contact, de l'autorisation d'accès (42, 43, 44) d'un support d'autorisation (28, 29, 30) positionné dans le logement d'accueil (26), l'unité d'acquisition (58) comportant au moins un élément de contact d'acquisition (47, 48) venant contacter l'autorisation d'accès (42, 43, 44),
**caractérisé**
**en ce que** l'appareil de nettoyage (10) comporte deux supports d'autorisation (28, 29, 30) ou davantage sur lesquels sont enregistrées des autorisations d'accès (42, 43, 44), qui sont liées à des profils d'accès différents, une étendue de fonctionnement, qui dépend du profil d'autorisation lié à une autorisation d'accès (42, 43, 44), pouvant être octroyée à une personne de service par l'appareil de nettoyage (10),
**en ce que** chaque support d'autorisation (28, 29, 30) comporte un dispositif de caractérisation (62, 63, 64) pour fournir une caractérisation (65, 66, 67), qui est associée au profil d'autorisation respectif du support d'autorisation (28, 29, 30), et perceptible par la personne de service à l'aide d'un organe des sens, des caractérisations (65, 66, 67) associées à des profils d'autorisation différents étant différentes les unes des autres,
**en ce que** les dispositifs de caractérisation (62, 63, 64) sont des dispositifs de caractérisation optiques (62, 63, 64) comprenant une caractérisation (65, 66, 67) perceptible visuellement, la caractérisation (65, 66, 67) perceptible visuellement étant une couleur,
et **en ce que** l'appareil de nettoyage (10) comporte un dispositif de reproduction (24) avec une unité de visualisation optique (25) pouvant être commandée, pour fournir une information d'autorisation perceptible visuellement par la personne de service et associée au profil d'autorisation d'un support d'autorisation (28, 29, 30) employé par la personne de service pour l'accès à l'appareil de nettoyage (10), en vue d'une possibilité de contrôle perceptible de manière fiable pour la personne de service, en lui permettant de constater si le profil d'autorisation d'un support d'autorisation (28, 29, 30) employé est le profil d'autorisation attendu par la personne de service.

2. Appareil de nettoyage selon la revendication 1, **caractérisé en ce que** ledit au moins un élément de contact d'acquisition (47) forme un élément de commutation (53), qui peut être actionné par le contact avec l'autorisation d'accès (42, 43, 44).

3. Appareil de nettoyage selon la revendication 2, **caractérisé en ce que** l'unité d'acquisition (58) comporte deux éléments de contact d'acquisition (47, 48) ou davantage, qui forment deux éléments de commutation (53, 54) ou davantage, pouvant être actionnés en fonction de l'autorisation d'accès (42, 43, 44) respective d'un support d'autorisation (28, 29, 30).

4. Appareil de nettoyage selon la revendication 2 ou la revendication 3, **caractérisé en ce que** l'appareil de nettoyage (10) comporte une unité de commande (57), qui est couplée au dit au moins un élément de commutation (53, 54) et qui permet de détecter l'actionnement dudit au moins un élément de commutation (53, 54).

5. Appareil de nettoyage selon la revendication 4, **caractérisé en ce que** l'appareil de nettoyage (10) comprend une unité de mémoire (59) couplée à l'unité de commande (57) et dans laquelle est enregistré le profil d'autorisation lié à l'autorisation d'accès (42, 43, 44).

6. Appareil de nettoyage selon l'une des revendications précédentes, **caractérisé en ce que** les supports d'autorisation (28, 29, 30) sont réalisés sous forme de clés (31, 32, 33), et **en ce que** le logement d'accueil (26) est un barillet de clé (27) pour les clés (31, 32, 33).

7. Appareil de nettoyage selon l'une des revendications précédentes, **caractérisé en ce que** l'appareil de nettoyage (10) comprend plusieurs supports d'autorisation (28, 29, 30) avec le même profil d'autorisation.

8. Appareil de nettoyage selon l'une des revendications précédentes, **caractérisé en ce que** l'appareil de nettoyage (10) comprend plusieurs supports d'autorisation (28, 29, 30) sur lesquels sont enregistrées des autorisations d'accès (42, 43, 44) identiques.

9. Appareil de nettoyage selon l'une des revendications précédentes, **caractérisé en ce que** les profils d'autorisation des supports d'autorisation (28, 29, 30) définissent des échelons d'autorisation successifs, l'appareil de nettoyage (10) étant en mesure de fournir, en présence d'un échelon d'autorisation d'ordre plus élevé, l'étendue de fonctionnement correspondant à un échelon d'ordre inférieur ainsi qu'au moins une fonction supplémentaire.

10. Appareil de nettoyage selon l'une des revendications précédentes, **caractérisé en ce que** l'appareil de nettoyage (10) comprend plusieurs supports d'autorisation (28, 29, 30) avec le même profil d'autorisation, et **en ce que** lesdits plusieurs supports d'autorisation (28, 29, 30) présentent des caractérisations (65, 66, 67) identiques.

11. Appareil de nettoyage selon l'une des revendications précédentes, **caractérisé en ce que** la caractérisation (65, 66, 67) d'au moins un support d'autorisation (28, 29, 30) est agencée sur une surface (68, 69, 70) du support d'autorisation (28, 29, 30).

12. Appareil de nettoyage selon la revendication 11, **caractérisé en ce que** la caractérisation (65, 66, 67) s'étend sur la totalité de la surface (68, 69, 70) du support d'autorisation (28, 29, 30).
